# EUROPEAN PATENT SPECIFICATION

(11) **EP 3 263 881 B1**
(45) Date of publication and mention of the grant of the patent: **25.03.2020**
(21) Application number: 16177558.0
(22) Date of filing: 01.07.2016
(51) Int. Cl.: F02M 21/02, F16L 39/00, F16K 3/08, A62C 4/02

(54) **ADJUSTABLE DEVICE, FLAME ARRESTOR ASSEMBLY AND DOUBLE-WALLED FUEL SUPPLY LINE ELEMENT FOR A GASEOUS FUEL SUPPLY SYSTEM**
VERSTELLBARE VORRICHTUNG, FLAMMENRÜCKSCHLAGSICHERUNG UND DOPPELWANDIGES KRAFTSTOFFVERSORGUNGSELEMENT FÜR EIN GASFÖRMIGES KRAFTSTOFFVERSORGUNGSSYSTEM
DISPOSITIF AJUSTABLE, ENSEMBLE COUPE-FLAMME ET ELEMENT D'ALIMENTATION EN CARBURANT À DOUBLE PAROI POUR UN SYSTÈME D'ALIMENTATION EN CARBURANT GAZEUX

(43) Date of publication of application: 03.01.2018
(73) Proprietor: Caterpillar Motoren GmbH & Co. KG, 24159 Kiel (DE)
(72) Inventor: BLEYER, Benjamin, 24159 Kiel (DE); REBELEIN, Werner, 24159 Kiel (DE)
(74) Representative: BRP Renaud & Partner mbB Rechtsanwälte Patentanwälte Steuerberater

(56) References cited:
- DE-A1- 2 708 824
- FR-A1- 2 609 637
- GB-A- 2 292 416
- GB-A- 2 348 604

## Description

### Technical Field

The present disclosure generally relates to a gaseous fuel supply system configured to supply gaseous fuel to, for example, an internal combustion engine. In particular, the present disclosure relates to a flame arrestor assembly for a fuel supply line element in a gaseous fuel supply system.

### Background

Fuel supply systems, in particular, fuel supply systems used in combination with gas or dual fuel engines, may have to be specifically designed for security purposes. For example, security regulations may require the installation of a flame arrestor at an engine interface. Further, double-walled or multi-walled configurations may have to be applied to all gas supplying components, for example, lines/pipes or connecting elements to be used in gas or dual fuel engines or other applications, for example, turbines, compressors, gas pipes, generators, etc.

Internal combustion engines for operation with gaseous fuel usually comprise a gaseous fuel supply system mounted to the engine and supplying gaseous fuel to the respective cylinders of the internal combustion engine. During operation, pressure fluctuations can build up within the gaseous fuel supply system and thus affect the operation of the engine. Usually, the reduced energy content of gaseous fuel (compared to liquid fuel) results in larger diameters in the gaseous fuel supply system to deliver the same amount of energy for combustion. Accordingly, the fuel pressure of gaseous fuel in the gaseous fuel supply system is relatively low. Further, gaseous fuel is compressible. One or more of these aspects may affect the generation of pressure fluctuations in the gaseous fuel supply system during operation. In particular, such pressure fluctuations may arise in the gaseous fuel supply system due to the fact that the gaseous fuel is not continuously supplied to every cylinder, but only during the intake stroke of the respective cylinders.

GB 2 292 416 A discloses a valve control of an engine air/fuel mixture, wherein air flow from a filter to a venturi is controlled by an iris operated by a stepper motor dependent on the signals from an oxygen sensor in the engine exhaust gases. The flow of land fill gas into the venturi is controlled by the overlap of apertures in plates determined by a stepper motor dependent on the signal from a methane sensor.

DE 27 08 824 A1 discloses a device for mixing fuel gas and air for operating internal combustion engines.

GB 2 348 604 A discloses a flame arrester.

The present disclosure is directed, at least in part, to improving or overcoming one or more aspects of prior systems.

### Summary of the Disclosure

In a first aspect of the present disclosure, an adjustable device for a fuel supply line element of a gaseous fuel supply system comprises the features of claim 1.

In a second aspect, a flame arrestor assembly for a fuel supply line element in a gaseous fuel supply system comprises the features of claim 5.

In a third aspect, a double-walled fuel supply line element for a gaseous fuel supply system of a gaseous fuel internal combustion engine comprises the features of claim 11.

Other features and aspects of this disclosure will be apparent from the following description and the accompanying drawings.

### Brief Description of the Drawings

FIG. 1 is a schematic overview of an internal combustion engine having a fuel supply system including fuel supply line elements according to the present disclosure.
FIG. 2 shows a cross-sectional view of a fuel supply line element including a flame arrestor assembly in accordance with the present disclosure.
FIG. 3 is a plan view of an adjustable device of a flame arrestor assembly in accordance with the present disclosure.
FIG. 4 is a cross-sectional view along the line C-C in FIG. 3.
FIG. 5 is a plan view of an orifice of an adjustable device in accordance with the present disclosure.
FIG. 6 is a plan view of a flame arrestor assembly including the orifice of FIG. 5 installed in a fuel line element in accordance with the present disclosure.

### Detailed Description

The following is a detailed description of exemplary embodiments of the present disclosure. The exemplary embodiments described herein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of protection. Rather, the scope of protection shall be defined by the appended claims.

The present disclosure may be based in part of the realization that a flame arrestor that is installed in a gaseous fuel supply line element, for example, a fuel supply line element configured for supplying gaseous fuel to a cylinder of an internal combustion engine, can also be used for reducing/dampening unwanted pressure fluctuations in the gaseous fuel supply line. In particular, the present invention may be based in part on the realization that, depending on the number of cylinders of an internal combustion engine, an ignition sequence of said cylinders, the distance between the gas valve unit and an engine interface, gas properties, etc., gas pressure fluctuations or pulsations in the gas supply line may occur. This may lead to one or more cylinders receiving insufficient gaseous fuel under certain loads. The flame arrestor assembly in accordance with the present disclosure is used to prevent or influence the gas pressure fluctuations such that an optimum fuel supply to each cylinder can be ensured.

Further, the present disclosure may be based at least in part on the realization that a two-part flame arrestor assembly can advantageously be used to increase the effectiveness with respect to suppressing gas pressure fluctuations. In particular, a cone-shaped element serving mainly as a flame arrestor may be used in combination with an orifice plate that homogenizes the flow of gas through the supply line element to influence the gas pressure fluctuations.

In addition, the present disclosure may be based at least in part on the realization that a cone-shaped flame arrestor may advantageously be mounted within the fuel supply line element via an orifice plate. This may allow for an easy and convenient installation of the flame arrestor assembly within a fuel supply line element.

Further, the present disclosure may be based at least in part on the realization that, by providing an adjustable orifice plate together with the flame arrestor, for example, a cone-shaped flame arrestor, the gas pressure fluctuations, i.e. the change of the same, can easily be adapted to specific environments, e.g., the configuration of the internal combustion engine including the number of cylinders, the ignition sequence, and the like, the distance between the gas valve unit and the engine interface, the gas properties, etc. Advantageously, two or more plate-shaped members that are movable with respect to each other to vary a flow area of the orifice plate can be used to tune the influence of the flame arrestor assembly installed in a given fuel supply system on the gas pressure fluctuations.

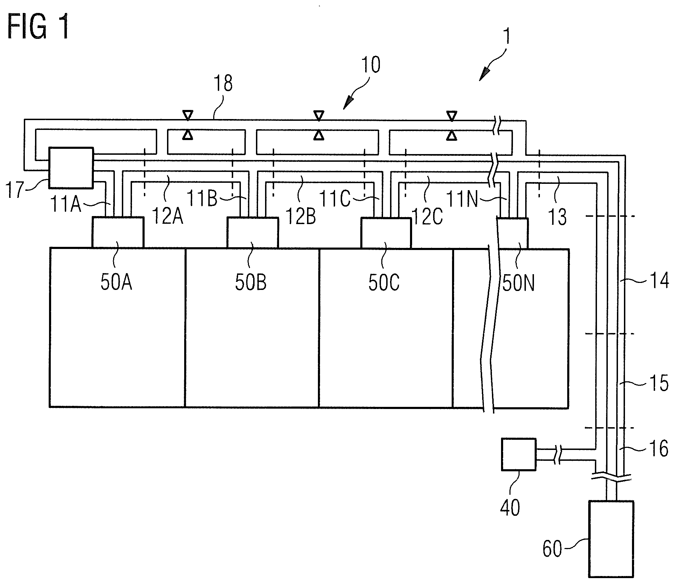

Referring to the drawings, FIG. 1 shows an internal combustion engine 1 comprising a fuel supply system 10. Fuel supply system 10 may be configured to selectively supply fuel such as gas or liquid fuel, e.g., diesel fuel. Herein, the term "fuel" is used for any kind of gaseous fuel as well as for any kind of liquid fuel. Internal combustion engine 1 may be a gaseous fuel engine, i.e., a gas or dual fuel engine combusting gaseous fuel to generate power.

Fuel supply system 10 may comprise a fuel line system and a monitoring system. The fuel line system may comprise a plurality of fuel line sections, and the monitoring system may comprise a plurality of corresponding monitoring sections. Each of the fuel line sections may comprise a fuel inlet valve 50A, 50B, 50C, ..., 50N. Further, each of the fuel line sections may comprise a double-walled connecting element 11A, 11B, 11C, ..., 11N fluidly connected to a respective one of fuel inlet valves 50A, 50B, 50C,...,50N and a fuel supply line element 12A, 12B, 12C, ... respectively connected between two double-walled connecting elements 11A, 11B, 11C, ..., 11N, as schematically shown by the dashed lines in FIG. 1.

In addition, the fuel line system includes a plurality of double-walled fuel supply line elements 13, 14, 15, 16 fluidly connected to each other and to double-walled connecting element 11N disposed at one end of internal combustion engine 1. Double-walled connecting element 11A disposed at the other end of internal combustion engine 1 may be fluidly connected to a flushing valve 17. Flushing valve 17 may also be fluidly connected to an inert gas supply line 18 configured to supply inert gas to each of the monitoring sections of the monitoring system.

As shown in FIG. 1, inert gas supply line 18 is fluidly connected to an inert gas reservoir 40. Further, the fuel line system of internal combustion engine 1 may terminate, for example, at double-walled fuel supply line element 16. In order to supply internal combustion engine 1 with fuel, for example, gaseous fuel, an inner line element of double-walled fuel supply line element 16 is fluidly connected to a fuel reservoir 60, for example, a gaseous fuel reservoir. An outer line element of double-walled fuel supply line element 16 is fluidly connected to inert gas reservoir 40.

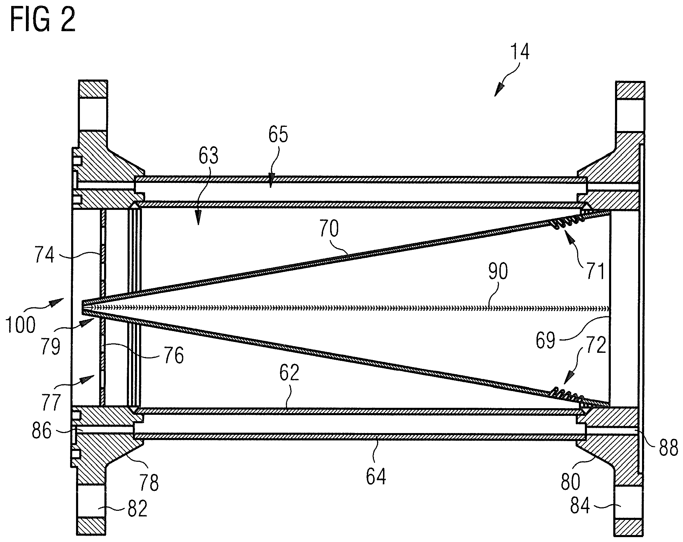

Referring now to FIG. 2, an exemplary double-walled fuel supply line element 14 is described in more detail. It should be appreciated that double-walled fuel supply line element 14 is only exemplary, and that double-walled fuel supply line elements 12A, 12B, 12C, 13, 15, 16 may be configured in the same or a similar manner.

As shown in FIG. 2, fuel supply line element 14 comprises an inner line element or conduit 62 and an outer line element or conduit 64. Inner line element 62 and outer line element 64 may be connected to each other via a first connecting flange 80 attached to respective first ends of inner line element 62 and outer line element 64 and a second connecting flange 78 attached to respective second ends of inner line element 62 and outer line element 64. For example, first connecting flange 80 may be configured to connect to a corresponding flange on one end of fuel supply line element 13, and second connecting flange 78 may be configured to connect to a corresponding flange on another end of fuel supply line element 15. Flanges 78, 80 may be configured in a complementary manner, for example, with a projection formed in an end face of second connecting flange 78 and a corresponding recess formed in an end face of first connecting flange 80. Bolt holes 84 are formed in an outer peripheral region of each connecting flange to allow attachment of the respective connecting flanges to a complementary flange or a complementary end face of an associated connecting element. Further, flow passages 86, 88 are formed in connecting flanges 78, 80, respectively, to allow passage of inert gas between different fuel supply line elements and connecting elements. For example, a plurality of flow passages 86, 88 may be distributed in the circumferential region of the respective connecting flanges at a radial position corresponding to an inner space 65 defined between inner line element 62 and outer line element 64.

Inner line element 62 defines a gas flow channel 63 for supplying gaseous fuel to cylinders of internal combustion engine 1 via the respective fuel inlet valves (gas admission valves) 50A, 50B, 50C, ..., 50N.

As shown in FIG. 2, a flame arrestor assembly 100 is mounted within fuel supply line element 14. In the exemplary embodiment, flame arrestor assembly 100 comprises a flame arrestor 71, for example, a cone-shaped element 70, configured to be installed in fuel supply line element 14. Cone-shaped element 70 includes a plurality of openings 72 formed therein to allow a flow of gaseous fuel therethrough within inner line element 62. Cone-shaped element 70 is formed by a sheet metal member that has been bent into a cone-shape, where opposing edges of the sheet metal member have been welded to each other at a weld 90. The plurality of openings 72 is equidistantly arranged in a circumferential direction of the cone-shaped element 70. In the exemplary embodiment, the plurality of openings 72 is arranged only in part of the cone-shaped element in the circumferential direction, for example, a region of more than 180 degrees, for example, between 180 and 270 degrees. In other embodiments, the plurality of openings may be arranged over the whole circumference of cone-shaped element 70, or with different distances between the same. As shown in Fig. 2, several rows of openings 72 may be formed in cone-shaped element 70, with the openings in each row being aligned or offset from each other in the circumferential direction.

Each of the plurality of openings 72 has an area (flow area) or diameter that is appropriate for allowing gaseous fuel flowing through fuel supply line element 14 to pass therethrough. For example, each opening 72 may be formed as a through hole in a plate having a thickness of about 1.5 mm with a diameter of between around 1.5 mm and around 3.5 mm. Further, the number and sizes of openings 72 may be such that cone-shaped element 70 functions as a flame arrestor, i.e., cools a flame front impinging on cone-shaped element 70, changes the flow conditions of the gaseous fuel flowing through openings 72, and separates a mixture of gaseous fuel and air flowing through openings 72 to extinguish any flames. In addition, cone-shaped element 70 may also influence the gas flow parameters, i.e., dampen gas pressure fluctuations occurring in the gaseous fuel flowing through fuel supply line element 14. In the exemplary embodiment shown in FIG. 2, cone-shaped element 70 is installed in fuel supply line element 14 such that gaseous fuel is supplied to a cylinder fluidly connected to second flange 78 via, for example, connecting element 11N and fuel supply line element 13. In other words, the flow direction of the gaseous fuel supplied to internal combustion 1 is from right to left in FIG. 2, but pressure waves may propagate in both directions in FIG. 2. It will be appreciated that in other embodiments cone-shaped element 70 may also be installed with a different orientation, for example, in the opposite direction.

As further shown in FIG. 2, flame arrestor assembly 100 also comprises an orifice 74 configured to be installed in fuel supply line element 14 and including at least one opening 76 formed in the same to allow a flow of gaseous fuel therethrough. In the exemplary embodiment, orifice 74 is plate-shaped and has an outer diameter that matches the inner diameter of fuel supply line element 14, i.e., connecting flange 78. Although FIG. 2 shows that orifice 74 is mounted within connecting flange 78, it will be appreciated that in other embodiments orifice 74 may also be mounted within inner line element 62 or first connecting flange 80.

Orifice 74 is configured to support at least in part cone-shaped element 70 when installed in fuel supply line element 14. In particular, orifice 74 includes at least one through-hole 79 configured to receive cone-shaped element 70 to support the same. Through-hole 79 is formed at a center of plate-shaped orifice 74. Further, in the exemplary embodiment, the at least one opening 76 includes a plurality of openings 76 distributed about through-hole 79.

An area (flow area) of each of the plurality of (first) openings 76 is greater than an area (flow area) of each of the plurality of (second) openings 72. The area of the plurality of first openings 76 may amount to, for example, about 60 % of the flow area of inner line element 62. Orifice 74 does not function primarily as a flame arrestor, but as an additional element configured to homogenize (distribute) the flow of gaseous fuel (and air) through fuel supply line element 14 prior to flowing through openings 72 formed in cone-shaped element 70. Therefore, in the direction of the gaseous fuel that is supplied to the cylinders of internal combustion engine 1, orifice 74 may be arranged downstream of cone-shaped element 70. Likewise, in the direction of a pressure wave from the associated cylinders, orifice 74 may be arranged upstream of cone-shaped element 70.

In the embodiment shown in FIG. 2, plate-shaped orifice 74 is mounted within connecting flange 78, for example, by welding. Of course, other methods may be used to mount orifice 74 within fuel supply line element 12A, for example, within connecting flange 78. Cone-shaped element 70 is mounted within fuel supply line element 14 at two positions, namely, its base end 69 is mounted within connecting flange 80, for example, by welding or the like, and the tip of cone-shaped element 70 is received in through-hole 79 of orifice 74. The tip end of cone-shaped element 70 may also be attached to orifice 74, for example, by welding etc. In other embodiments, the tip end of cone-shaped element 70 may be loosely fitted into through-hole 79, and cone-shaped element 70 may only be fixed within fuel supply line element 12A at base end 69.

The number and sizes of second openings 72 and/or first openings 76 may be adapted to the specific configuration of internal combustion engine 1 and/or fuel supply system 10 and to the gas fuel properties. For example, the number and sizes may be set to achieve an optimum dampening of pressure fluctuations for a given number of cylinders, a length of each fuel supply line element, diameters of the same, a distance to, for example, gaseous fuel reservoir 60, etc. In this manner, an optimum dampening of gas pressure fluctuations can be achieved. Generally, an area of orifice 74 may be adapted to, for example, the inner volume within fuel supply line element 14, for example, the cross-section of inner line element 62 and/or the length of the same.

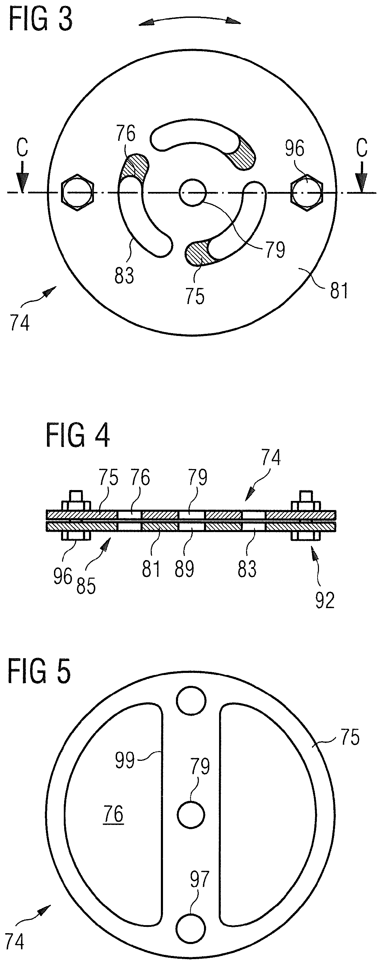

In order to allow for an adjustment of the influence, i.e. the properties, of flame arrestor assembly 100 in the field, orifice 74 may advantageously be configured as shown in FIG. 3. In particular, FIG. 3 shows that orifice 74 is adjustable to vary the area of the at least one first opening 76, i.e., the plurality of first openings 76 distributed about the center of through-hole 79. To this end, orifice 74 comprises a first plate-shaped member 75 including first openings 76 and an adjustable element 85, for example, a second plate-shaped member 81 including at least one third opening 83. First plate shaped member 75 may be fixed to fuel line element 14, for example, welded to connecting flange 78. Second plate-shaped member 81 is connectable to first plate-shaped member 75 to cover at least in part first opening 76. In particular, second plate-shaped member 81 is configured to be fixed to first plate-shaped member 75 in a plurality of different orientations corresponding to different areas of first opening 76. As shown in FIG. 4, a plurality of bolts 96 may be used to fix second plate-shaped member 81 in a desired orientation with respect to first plate-shaped member 75. To this end, a plurality of bolt holes (not shown) may be distributed about through-hole 79 (and an associated through-hole 89 formed in second plate-shaped member 81).

In the example shown in FIG. 3, each of first openings 76 and third openings 83 is formed as an elongate opening that extends substantially along the circumferential direction of plate-shaped members 75, 81. Openings 76, 83 may be arranged at the same radial position, i.e. overlap in a projection onto the plane defined by plate-shaped members 75, 81. Therefore, by rotating second plate-shaped member 81 with respect to first plate-shaped member 75, flow areas of openings 76 can be adjusted, as shown by the arrow in FIG. 3. Accordingly, different orientations may be set, and the properties of fuel supply system 10 for a given orientation may be tested. In this manner, an optimum configuration, i.e. an optimum flow area of openings 76, for dampening pressure fluctuations and thereby optimizing the fuel supply to each cylinder of internal combustion engine 1 may be obtained. It will be readily appreciated that, although FIG. 3 shows elongate openings 76, 83, any appropriate shape may be used for openings 76, 83. For example, each of plate members 75, 81 may comprise a plurality of circular openings, rectangular openings, elongate openings or any combination thereof, as well as any appropriate number of openings, that may be (partially) aligned with each other to vary the flow area of openings 76.

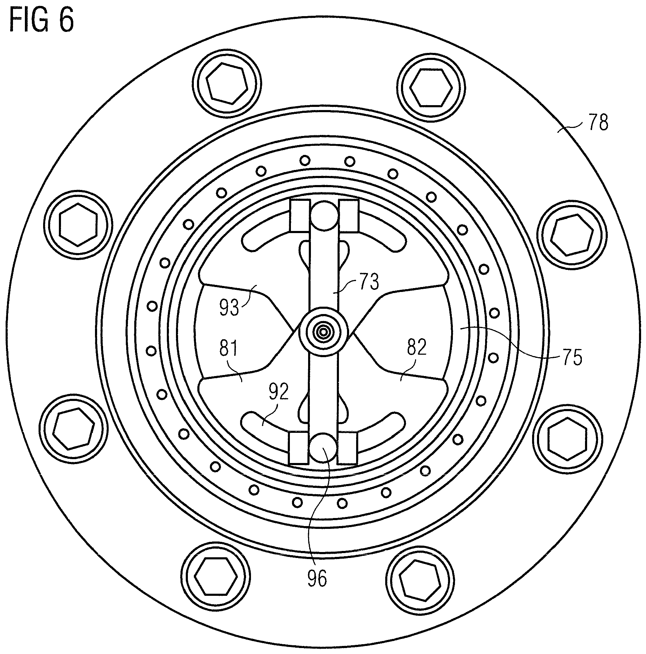

According to the invention, second plate-shaped member 81 is rotatably coupled to first plate-shaped member 75, by inserting at least one or a plurality of bolts 96 in at least one or a plurality of elongate bolt holes 92 (see FIG. 6, which will be described in more detail below) formed in at least one of members 75, 81, where plate-shaped members 75, 81 may be rotated with respect to each other when bolts 96 are loosened, and may be locked to a desired orientation when bolts 96 are tightened. It will be readily appreciated, however, that many different possibilities exist for providing an adjustable orifice that includes one or more members, for example, a plurality of plate-shaped members.

Another example for an adjustable element is shown in FIGS. 5 and 6. As shown in FIG. 5, orifice 74 may include plate-shaped member 75 having a circular cross-section and a pair of symmetrical openings 76 formed therein. For example, openings 76 may be separated by a strip-shaped section 99 of plate-shaped member 75 extending along a diameter of plate-shaped member 75 and connecting opposite sides of an annular outer portion of orifice 74. Through-hole 79 is formed at the center of the strip-shaped section 99, and a pair of bolt holes 97 is formed adjacent to the opposite ends of strip-shaped section 99.

In the present embodiment, adjustable element 85 includes two plate-shaped members 81 and 82, each having a dumbbell shape with a central strip-like section and circumferentially extended end sections 93. Each plate-shaped member 81, 82 includes a central bore aligned with through-hole 79 formed in plate-shaped member 75 for receiving the tip of cone-shaped element 70. Further, elongate bolt holes 92 are formed in the respective end sections of dumbbell-shaped plate members 81, 82 for receiving bolts 96. Bolts 96 may be inserted into bolt holes 92 and 97 and secured to members 75 and 81, 82 at a desired position using, for example, a securing plate 73.

When a desired dampening of the pressure fluctuations is to be set using adjustable element 85, one or both of members 81, 82 may be attached to plate-shaped member 75, and bolts 96 may be loosely fitted into bolt holes 92 and 97. Then, member(s) 81, 82 may be rotated to achieve the desired reduction of the flow area of orifice 74, for example, from about 60 % to between about 50 % and about 25 % of the flow area of fuel line element 14, i.e., inner line element 62. To facilitate the adjustment, indicators (not shown) may be provided on one or more of plate-shaped members 75, 81 and 82, which indicators may display the flow area associated with a particular orientation of members 81, 82. When the desired reduction has been obtained, bolts 96 may be tightened to fix member(s) 81, 82 relative to plate-shaped member 75. In some embodiments, member(s) 81, 82 may be detachably fixed to plate-shaped member 75, for the purpose of performing tests to achieve the optimum gas flow properties of assembly 100 and/or the optimum fuel supply to the cylinders of internal combustion engine 1. In some embodiments, bolts 96 may be secured by deforming securing plate 73 after the desired configuration has been achieved.

According to the present disclosure, the cone-shaped element serving primarily as a flame arrestor and the orifice serving to homogenize a flow of gaseous fuel and air in addition to the cone-shaped element can be used to adapt/tune the gas flow properties of flame arrestor assembly 100 installed in fuel supply system 10. In particular, the flow area of orifice 74 may be adjusted depending on the application, for example, the configuration of internal combustion engine 1 or the dimensions/lengths of fuel supply line elements 12A, 12B, 12C, 13, 14, 15 and 16.

### Industrial Applicability

The internal combustion engine disclosed herein may include additional features that are not shown in the drawings, such as air systems, cooling systems, etc. For the purposes of the present disclosure, internal combustion engine 1 may be a gas or dual fuel engine. Gaseous fuels for an internal combustion engine 1 may include natural gas, a combination of natural gas and other gaseous fuel, landfill gas, and the like.

One skilled in the art will recognize that internal combustion engine 1 may be any type of engine that would use a gaseous fuel supply system as described herein, for example, a spark-ignition engine utilizing a precombustion chamber, or pilot fuel ignited engines. Furthermore, internal combustion engine 1 may be of any size, with any number of cylinders and in any configuration, for example, a V or in line configuration. Internal combustion engine 1 may be used in any machine or other device, including trucks or vehicles, earth moving equipment, generators, marine applications, pumps, stationary equipment or other engine-powered applications.

In the following, modifications that may be applied in combination or alternatively to the exemplary features of the embodiment are discussed.

In some embodiments, flame arrestor 71 may not be cone-shaped. Any appropriate shape may be used for flame arrestor 71 that allows for cooling and separating any flames and/or hot gases flowing back from the intake valves of the associated cylinders. For example, flame arrestor 71 may be formed by a plurality of plates, each including a plurality of openings 72, disposed one after the other in the longitudinal direction of the fuel line element, for example, in a frame together with one or more intermediate layers.

Further, in some embodiments, flame arrestor 71 (cone-shaped element 70) and orifice 74 may be provided separately from each other. In other words, flame arrestor 71 may not be mounted within fuel line element 12A via orifice 74. In some embodiments, an additional bracket or the like may be provided to support, for example, cone-shaped element 70. In other words, flame arrestor 71 and orifice 74 may be spaced apart from each other in the flow direction of the gaseous fuel within fuel supplying element 14 and may not be connected to each other.

Although flame arrestor assembly 100 has been described as being installed in fuel supply line element 14, it will be appreciated that assembly 100 may also be installed in other fuel supplying elements, for example, one of fuel supply line elements 12A, 12B, 12C, 13, 15, 16. In view of this, it will also be appreciated that assembly 100 can be used in applications without an internal combustion engine, for example, in gas supply pipes in general. This is because the presence of other gas properties and gas pressure fluctuations may also be problematic in these other applications, and assembly 100 may serve to supress such fluctuations also in said other applications.

Although in the exemplary embodiment elements 70, 74 have been described as being welded to fuel supply line element 12A, it will be readily appreciated that other methods may be used for connecting elements 70, 74 to the components of fuel supply system 10. For example, elements 70, 74 may be press-fitted or glued into respective fuel supply line elements, attached via bolts, etc., or any combination thereof. In addition, elements 70, 74 may be mounted to inner line element 62 instead of being mounted to flanges 78, 80, if desired.

Although the preferred embodiments of this invention have been described herein, improvements and modifications may be incorporated without departing from the scope of the appended claims.

## Claims

1. An adjustable device (77) for a fuel supply line element (12A, 12B, 12C, 13, 14, 15, 16) of a gaseous fuel supply system (10), comprising:
an orifice (74) configured to be installed in the fuel supply line element (12A, 12B, 12C, 13, 14, 15, 16) and defining at least one first opening (76) for allowing a flow of gaseous fuel through the orifice (74); and
at least one adjustable element (85) configured to adjust the flow area of the at least one first opening (76) for optimizing gas flow parameters in the gaseous fuel supply system (10),
wherein the orifice (74) is configured as a first plate-shaped member (75) with an outer diameter configured to match the inner diameter of the fuel supply line element (12A, 12B, 12C, 13, 14, 15, 16), and the at least one adjustable element (85) includes a second plate-shaped member (81) connectable to the first plate-shaped member (75) to cover at least in part the at least one first opening (76),
wherein the second plate-shaped member (81) is configured to be fixed to the first plate-shaped member (75) in a plurality of different orientations corresponding to different flow areas of the at least one first opening (76), and
**characterized in that**
at least one of the first plate-shaped member (75) and the second plate-shaped member (81) includes at least one elongate bolt hole (92) extending in the circumferential direction and receiving a bolt (96) for fixing the second plate-shaped member (81) to the first plate-shaped member (75).

2. The adjustable device according to claim 1, wherein the second plate-shaped member (81) is rotatably connectable to the first plate-shaped member (75).

3. The adjustable device according to claim 1, wherein the second plate-shaped member (81) is dumbbell-shaped, the at least one elongate bolt hole (92) being formed in a circumferentially extended peripheral region (93) of the second plate-shaped member (81).

4. The adjustable device according to any one of claims 1 to 3, wherein the at least one adjustable element (85) includes a third plate-shaped member (82) connectable to the first plate-shaped member (75) and being configured identical to the second plate-shaped member (81).

5. A flame arrestor assembly (100) for a fuel supply line element (12A, 12B, 12C, 13, 14, 15, 16) in a gaseous fuel supply system (10), comprising:
the adjustable device (77) according to any one of claims 1 to 4; and
a flame arrestor (71) configured to be installed in the fuel supply line element (12A, 12B, 12C, 13, 14, 15, 16) and defining a plurality of second openings (72) for allowing a flow of gaseous fuel through the flame arrestor (71), each second opening (72) having a flow area that is smaller than a flow area of the at least one first opening (76).

6. The assembly according to claim 5, wherein the flame arrestor (71) includes a cone-shaped element (70), and the plurality of second openings (72) is formed proximal to a base end (69) of the cone-shaped element (70).

7. The assembly according to claim 6, wherein the cone-shaped element (70) is formed by joining opposing edges of a sheet metal member to each other at a weld (90).

8. The assembly according to claim 6 or 7, wherein an outer circumference of the base end (69) of the cone-shaped element (70) matches the inner circumference of the fuel supply line element (12A, 12B, 12C, 13, 14, 15, 16).

9. The assembly according to any one of claims 6 to 8, wherein the adjustable device (77) is configured to support at least in part the flame arrestor (71) when installed in the fuel supply line element (12A, 12B, 12C, 13, 14, 15, 16).

10. The assembly according to claim 9, wherein the orifice (74) includes at least one through-hole (79) configured to receive the cone-shaped element (70) to support the same.

11. A double-walled fuel supply line element (12A, 12B, 12C, 13, 14, 15, 16) for a gaseous fuel supply system (10) of a gaseous fuel internal combustion engine (1), comprising:
an inner line element (62);
an outer line element (64);
a first connecting flange (80) attached to respective first ends of the inner line element (62) and the outer line element (64);
a second connecting flange (78) attached to respective second ends of the inner line element (62) and the outer line element (64); and
the flame arrestor assembly (100) according to any one of claims 5 to 10 mounted to at least one of the inner line element (62), the first connecting flange (80) and the second connecting flange (78).

## Patentansprüche

1. Verstellbare Vorrichtung (77) für ein Kraftstoffzuleitungselement (12A, 12B, 12C, 13, 14, 15, 16) eines Zuleitungssystems für gasförmigen Kraftstoff (10), umfassend:
eine Drossel (74), die dazu konfiguriert ist, in dem Kraftstoffzuleitungselement (12A, 12B, 12C, 13, 14, 15, 16) installiert zu sein und mindestens eine erste Öffnung (76) zum Zulassen eines Stromes gasförmigen Kraftstoffs durch die Drossel (74) definiert; und
mindestens ein verstellbares Element (85), das zum Verstellen der Durchflussfläche der mindestens einen ersten Öffnung (76) zur Optimierung der Gasströmungsparameter in dem Zuleitungssystem für gasförmigen Kraftstoff (10) konfiguriert ist,
wobei die Drossel (74) als ein erstes plattenförmiges Element (75) mit einem Außendurchmesser ausgebildet ist, der konfiguriert ist, um dem Innendurchmesser des Kraftstoffzuleitungselements (12A, 12B, 12C, 13, 14, 15, 16) zu entsprechen, und das mindestens eine verstellbare Element (85) ein zweites plattenförmiges Element (81) einschließt, das mit dem ersten plattenförmigen Element (75) verbindbar ist, um mindestens teilweise die mindestens eine erste Öffnung (76) abzudecken,
wobei das zweite plattenförmige Element (81) dazu konfiguriert ist, an dem ersten plattenförmigen Element (75) in einer Vielzahl verschiedener Orientierungen befestigt zu sein, die unterschiedlichen Durchflussflächen der mindestens einen ersten Öffnung (76) entsprechen, und **dadurch gekennzeichnet, dass**
das erste plattenförmige Element (75) und das zweite plattenförmige Element (81) mindestens ein längliches Schraubenloch (92) einschließen, das sich in Umfangsrichtung erstreckt und eine Schraube (96) zum Befestigen des zweiten plattenförmigen Elements (81) an dem ersten plattenförmigen Element (75) aufnimmt.

2. Verstellbare Vorrichtung nach Anspruch 1, wobei das zweite plattenförmige Element (81) drehbar mit dem ersten plattenförmigen Element (75) verbindbar ist.

3. Verstellbare Vorrichtung nach Anspruch 1, wobei das zweite plattenförmige Element (81) hantelförmig ist, wobei das mindestens eine längliche Schraubenloch (92) in einem sich in Umfangsrichtung erstreckenden Umfangsbereich (93) des zweiten plattenförmigen Elements (81) ausgebildet ist.

4. Verstellbare Vorrichtung nach einem der Ansprüche 1 bis 3, wobei das mindestens eine verstellbare Element (85) ein drittes plattenförmiges Element (82) einschließt, das mit dem ersten plattenförmigen Element (75) verbindbar ist und identisch mit dem zweiten plattenförmigen Element (81) konfiguriert ist.

5. Flammenrückschlagsicherungsanordnung (100) für ein Kraftstoffzuleitungselement (12A, 12B, 12C, 13, 14, 15, 16) in einem Zuleitungssystem für gasförmigen Kraftstoff (10), umfassend:
die verstellbare Vorrichtung (77) nach einem der Ansprüche 1 bis 4; und
eine Flammenrückschlagsicherung (71), die zum Einbau in das Kraftstoffzuleitungselement (12A, 12B, 12C, 13, 14, 15, 16) konfiguriert ist und eine Vielzahl von zweiten Öffnungen (72) zum Zulassen eines Stromes gasförmigen Kraftstoffs durch die Flammenrückschlagsicherung (71) definiert, wobei jede zweite Öffnung (72) eine Durchflussfläche aufweist, die kleiner ist als eine Durchflussfläche der mindestens einen ersten Öffnung (76).

6. Anordnung nach Anspruch 5, wobei die Flammenrückschlagsicherung (71) ein kegelförmiges Element (70) einschließt und die Vielzahl von zweiten Öffnungen (72) proximal zu einem Basisende (69) des kegelförmigen Elements (70) ausgebildet sind.

7. Anordnung nach Anspruch 6, wobei das kegelförmige Element (70) gebildet wird, indem gegenüberliegende Kanten eines Blechelements an einer Schweißnaht (90) miteinander verbunden werden.

8. Anordnung nach Anspruch 6 oder 7, wobei ein Außenumfang des Basisendes (69) des kegelförmigen Elements (70) dem Innenumfang des Kraftstoffzuleitungselements (12A, 12B, 12C, 13, 14, 15, 16) entspricht.

9. Anordnung nach einem der Ansprüche 6 bis 8, wobei die verstellbare Vorrichtung (77) dazu konfiguriert ist, die Flammenrückschlagsicherung (71) mindestens teilweise zu lagern, wenn diese in dem Kraftstoffzuleitungselement (12A, 12B, 12C, 13, 14, 15, 16) montiert ist.

10. Anordnung nach Anspruch 9, wobei die Drossel (74) mindestens ein Durchgangsloch (79) einschließt, das dazu konfiguriert ist, das kegelförmige Element (70) zur Lagerung desselben aufzunehmen.

11. Doppelwandiges Kraftstoffzuleitungselement (12A, 12B, 12C, 13, 14, 15, 16) für ein Zuleitungssystem für gasförmigen Kraftstoff (10) einer Brennkraftmaschine für gasförmigem Kraftstoff (1), umfassend:
ein inneres Leitungselement(62);
ein äußeres Leitungselement (64);
einen ersten Verbindungsflansch (80), der an jeweiligen ersten Enden des inneren Leitungselements (62) und des äußeren Leitungselements (64) angebracht ist;
einen zweiten Verbindungsflansch (78), der an jeweiligen zweiten Enden des inneren Leitungselements (62) und des äußeren Leitungselements (64) angebracht ist; und
die Flammenrückschlagsicherungsanordnung (100) nach einem der Ansprüche 5 bis 10, die an mindestens einem von dem inneren Leitungselement (62), dem ersten Verbindungsflansch (80) und dem zweiten Verbindungsflansch (78) angebracht ist.

## Revendications

1. Dispositif ajustable (77) pour un élément de conduite d'alimentation en carburant (12A, 12B, 12C, 13, 14, 15, 16) d'un système d'alimentation en carburant gazeux (10), comprenant :
un orifice (74) configuré pour être installé dans l'élément de conduite d'alimentation en carburant (12A, 12B, 12C, 13, 14, 15, 16) et définissant au moins une première ouverture (76) pour permettre un écoulement de carburant gazeux à travers l'orifice (74) ; et
au moins un élément ajustable (85) configuré pour ajuster l'aire d'écoulement de l'au moins une première ouverture (76) pour optimiser des paramètres d'écoulement de gaz dans le système d'alimentation en carburant gazeux (10),
dans lequel l'orifice (74) est configuré en tant que premier élément en forme de plaque (75) avec un diamètre externe configuré pour correspondre au diamètre interne de l'élément de conduite d'alimentation en carburant (12A, 12B, 12C, 13, 14, 15, 16), et l'au moins un élément ajustable (85) inclut un deuxième élément en forme de plaque (81) pouvant être raccordé au premier élément en forme de plaque (75) pour couvrir au moins en partie l'au moins une première ouverture (76),
dans lequel le deuxième élément en forme de plaque (81) est configuré pour être fixé au premier élément en forme de plaque (75) dans une pluralité d'orientations différentes correspondant à différentes aires d'écoulement de l'au moins une première ouverture (76), et **caractérisé en ce que**
au moins l'un parmi le premier élément en forme de plaque (75) et le deuxième élément en forme de plaque (81) inclut au moins un trou de boulon oblong (92) s'étendant dans la direction circonférentielle et recevant un boulon (96) pour fixer le deuxième élément en forme de plaque (81) au premier élément en forme de plaque (75).

2. Dispositif ajustable selon la revendication 1, dans lequel le deuxième élément en forme de plaque (81) peut être raccordé de manière rotative au premier élément en forme de plaque (75).

3. Dispositif ajustable selon la revendication 1, dans lequel le deuxième élément en forme de plaque (81) est en forme d'haltère, l'au moins un trou de boulon oblong (92) étant formé dans une région périphérique circonférentiellement étendue (93) du deuxième élément en forme de plaque (81).

4. Dispositif ajustable selon l'une quelconque des revendications 1 à 3, dans lequel l'au moins un élément ajustable (85) inclut un troisième élément en forme de plaque (82) pouvant être raccordé au premier élément en forme de plaque (75) et étant configuré identique au deuxième élément en forme de plaque (81).

5. Ensemble pare-flamme (100) pour un élément de conduite d'alimentation en carburant (12A, 12B, 12C, 13, 14, 15, 16) dans un système d'alimentation en carburant gazeux (10), comprenant :
le dispositif ajustable (77) selon l'une quelconque des revendications 1 à 4 ; et
un pare-flamme (71) configuré pour être installé dans l'élément de conduite d'alimentation en carburant (12A, 12B, 12C, 13, 14, 15, 16) et définissant une pluralité de deuxièmes ouvertures (72) pour permettre un écoulement de carburant gazeux à travers le pare-flamme (71), chaque deuxième ouverture (72) ayant une aire d'écoulement qui est plus petite qu'une aire d'écoulement de l'au moins une première ouverture (76).

6. Ensemble selon la revendication 5, dans lequel le pare-flamme (71) inclut un élément en forme de cône (70), et la pluralité de deuxièmes ouvertures (72) est formée proximale par rapport à une extrémité de base (69) de l'élément en forme de cône (70).

7. Ensemble selon la revendication 6, dans lequel l'élément en forme de cône (70) est formé en joignant des bords opposés d'un élément de tôle métallique l'un à l'autre au niveau d'une soudure (90).

8. Ensemble selon la revendication 6 ou 7, dans lequel une circonférence externe de l'extrémité de base (69) de l'élément en forme de cône (70) correspond à la circonférence interne de l'élément de conduite d'alimentation en carburant (12A, 12B, 12C, 13, 14, 15, 16).

9. Ensemble selon l'une quelconque des revendications 6 à 8, dans lequel le dispositif ajustable (77) est configuré pour supporter au moins en partie le pare-flamme (71) lorsqu'il est installé dans l'élément de conduite d'alimentation en carburant (12A, 12B, 12C, 13, 14, 15, 16).

10. Ensemble selon la revendication 9, dans lequel l'orifice (74) inclut au moins un trou traversant (79) configuré pour recevoir l'élément en forme de cône (70) pour supporter celui-ci.

11. Élément de conduite d'alimentation en carburant à double paroi (12A, 12B, 12C, 13, 14, 15, 16) pour un système d'alimentation en carburant gazeux (10) d'un moteur à combustion interne à carburant gazeux (1), comprenant :
un élément de conduite interne (62) ;
un élément de conduite externe (64) ;
une première bride de raccordement (80) fixée à des premières extrémités respectives de l'élément de conduite interne (62) et de l'élément de conduite externe (64) ;
une deuxième bride de raccordement (78) fixée à des deuxièmes extrémités respectives de l'élément de conduite interne (62) et de l'élément de conduite externe (64) ; et
l'ensemble pare-flamme (100) selon l'une quelconque des revendications 5 à 10 monté sur au moins l'un parmi l'élément de conduite interne (62), la première bride de raccordement (80) et la deuxième bride de raccordement (78).
